(19) Europäisches Patentamt / European Patent Office / Office européen des brevets

(11) **EP 2 783 742 A1**

(12) **EUROPEAN PATENT APPLICATION**

(43) Date of publication:
01.10.2014 Bulletin 2014/40

(51) Int Cl.:
*B01D 63/06* [(2006.01)]     *B01D 69/02* [(2006.01)]
*B01D 69/12* [(2006.01)]     *B01D 71/02* [(2006.01)]

(21) Application number: 14161416.4

(22) Date of filing: 25.03.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 29.03.2013  JP 2013075064

(71) Applicant: **NGK Insulators, Ltd.**
**Nagoya-city, Aichi 467-8530 (JP)**

(72) Inventors:
• INUKAI, Naoko
  Nagoya-city, Aichi 467-8530 (JP)
• ISOMURA, Manabu
  Nagoya-city, Aichi 467-8530 (JP)

(74) Representative: **TBK**
**Bavariaring 4-6**
**80336 München (DE)**

(54) **Ceramic separation filter with two different zeolite membrane layers and dehydration method**

(57)     Provided is a ceramic separation filter having excellent separation performance and such acid resistance. The ceramic separation filter 10 includes a porous substrate 8 and a separation membrane 14 disposed on the substrate 8. The separation membrane 14 is a zeolite laminate including an outermost layer 15 made of zeolite that is located on an outermost surface side and an underlayer 16 made of zeolite that is located below the outermost layer 15, and the outermost layer 15 of the separation membrane 14 has a value of Si/Al ratio that is larger than a value of Si/Al ratio of the underlayer 16 of the separation membrane 14. The thickness of the outermost layer 15 of the separation membrane 14 preferably is 1/2 or less of the thickness of the underlayer 16.

FIG.3

**Description**

The present application is an application based on JP-2013-075064 filed on 03/29/2013 with the Japanese Patent Office, the entire contents of which are incorporated herein by reference.

BACKGROUND OF THE INVENTION

Field of the Invention

The present invention relates to a ceramic separation filter and a dehydration method. The present invention more particularly relates to a ceramic separation filter having excellent separation performance and such acid resistance and a dehydration method using this ceramic separation filter.

Background Art

A conventionally known method to remove water from acidic aqueous solution uses a separation membrane made of zeolite. Specifically this method removes water from acidic aqueous solution by letting mixture of water and organic matter such as an acid component like acetic acid (i.e., acidic aqueous solution) flow through a separation membrane made of zeolite (zeolite membrane) while selectively permeating water in the acidic aqueous solution therethrough.

Such known zeolite membranes include membranes made of DDR-type zeolite and chabazite-type zeolite (see Patent Documents 1 and 2, for example).

[Patent Document 1] JP-A-2011-16123
[Patent Document 2] JP-A-2011-121040

SUMMARY OF THE INVENTION

Although zeolite membranes described in Patent Documents 1 and 2 have excellent separation performance, they do not have acid resistance. Specifically a zeolite membrane described in Patent Document 1 is excellent in both of the separation performance and water permeation speed, but when dehydration of acetic acid solution (acidic aqueous solution) of high concentration exceeding 50 mass%, for example, is performed, the concentration of acetic acid in the permeated water increases after a certain time period. That is, the zeolite membrane described in Patent Document 1 does not have sufficient durability in acidic aqueous solution (acid resistance). Although the zeolite membrane described in Patent Document 2 has improved acid resistance, it has a large value of Si/Al ratio, and so does not have a sufficient affinity for water. As a result, the zeolite membrane described in Patent Document 2 has low water permeation speed, and has a problem of high concentration of acetic acid in the permeated water when this zeolite membrane is used (i.e., insufficient separation performance).

Then, the development of a ceramic separation filter having excellent separation performance and such acid resistance has been demanded.

In view of the problems of the conventional techniques, it is an object of the present invention to provide a ceramic separation filter having excellent separation performance and such acid resistance and such a dehydration method.

The present invention provides the following ceramic separation filter and dehydration method.

[1] A ceramic separation filter includes a porous substrate; and a separation membrane disposed on the substrate. The separation membrane is a zeolite laminate including an outermost layer made of zeolite that is located on an outermost surface side and an underlayer made of zeolite that is located below the outermost layer, and the outermost layer of the separation membrane has a value of Si/Al ratio that is larger than a value of Si/Al ratio of the underlayer of the separation membrane.

[2] In the ceramic separation filter according to [1], the thickness of the outermost layer of the separation membrane is 1/2 or less of the thickness of the underlayer.

[3] In the ceramic separation filter according to [1] or [2], the outermost layer and the underlayer of the separation membrane each include chabazite-type zeolite or DDR-type zeolite.

[4] In the ceramic separation filter according to [3], the outermost layer and the underlayer of the separation membrane each are made of chabazite-type zeolite.

[5] In the ceramic separation filter according to [3], the outermost layer and the underlayer of the separation membrane each are made of DDR-type zeolite.

[6] In the ceramic separation filter according to any one of [1] to [5], the value of the Si/Al ratio of the underlayer of the separation membrane is 5 or less.

[7] In the ceramic separation filter according to any one of [1] to [6], the value of the Si/Al ratio of the outermost layer of the separation membrane is 7 or more.

[8] In the ceramic separation filter according to any one of [1] to [7], the substrate includes ceramic having a wall that defines and forms a plurality of cells extending from one end face to the other end face, and the separation membrane is disposed on a surface of the wall of the substrate.

[9] A dehydration method is to remove water from acidic aqueous solution using the ceramic separation filter according to any one of [1] to [8]. The ceramic separation filter has a first space that is a space divided by the separation membrane and is located on a surface side of the separation membrane of the ceramic separation filter, and a second space that is a space on a rear face side of the separation membrane. The second space between the first space and the second space is reduced in pressure less than atmospheric pressure, and in this state, the dehydration method includes a step of applying the acidic aqueous solution to the first space so as to cover the surface of the separation membrane, a step of thus allowing the water in the acidic aqueous solution to selectively pass through from the first space to the second space, and thus removing the water from the acidic aqueous solution.

In the ceramic separation filter of the present invention, the outermost layer of the separation membrane has a value of Si/Al ratio that is larger than that of the underlayer of the separation membrane. With this configuration, the separation membrane of the ceramic separation filter of the present invention can exert excellent acid resistance because the layer (outermost layer) having excellent acid resistance compared with other layers (underlayer) is disposed on the outermost surface side. The separation membrane of the ceramic separation filter of the present invention can exert excellent separation performance as well because the layer (underlayer) having excellent separation performance as compared with the outermost layer is located below the outermost layer. Since the ceramic separation filter of the present invention includes the separation membrane having such a layered structure, the separation membrane as a whole can exert excellent separation performance and excellent acid resistance. That is, the separation membrane has excellent advantageous effects (excellent separation performance and such acid resistance) that cannot be obtained from the outermost layer or the underlayer that is used alone as a separation membrane.

The dehydration method of the present invention uses a ceramic separation filter of the present invention as a filter for dehydration of a target of separation such as acidic aqueous solution containing water. Therefore, the dehydration method of the present invention can realize dehydration performed for long time while keeping excellent separation performance even when acidic aqueous solution is used as a target of separation.

BRIEF DESCRIPTION OF THE DRAWINGS

Fig. 1 is a perspective view schematically showing a ceramic separation filter that is one embodiment of the present invention.

Fig. 2 is a cross-sectional view schematically showing a cross section of the ceramic separation filter shown in Fig. 1 that is parallel to the cell extending direction.

Fig. 3 is an enlarged cross-sectional view schematically showing region P of Fig. 2.

Fig. 4 is a cross sectional view schematically showing a dehydration apparatus used for a dehydration method that is one embodiment of the present invention.

Fig. 5 is a perspective view schematically showing another embodiment of a ceramic separation filter of the present invention.

DESCRIPTION OF THE PREFERRED EMBODIMENTS

The following describes embodiments of the present invention, with reference to the drawings. The present invention is not limited to the following embodiments. The present invention is to be understood to include the following embodiments, to which modifications and improvements are added as needed based on the ordinary knowledge of a person skilled in the art without departing from the scope of the present invention.

[1] Ceramic separation filter

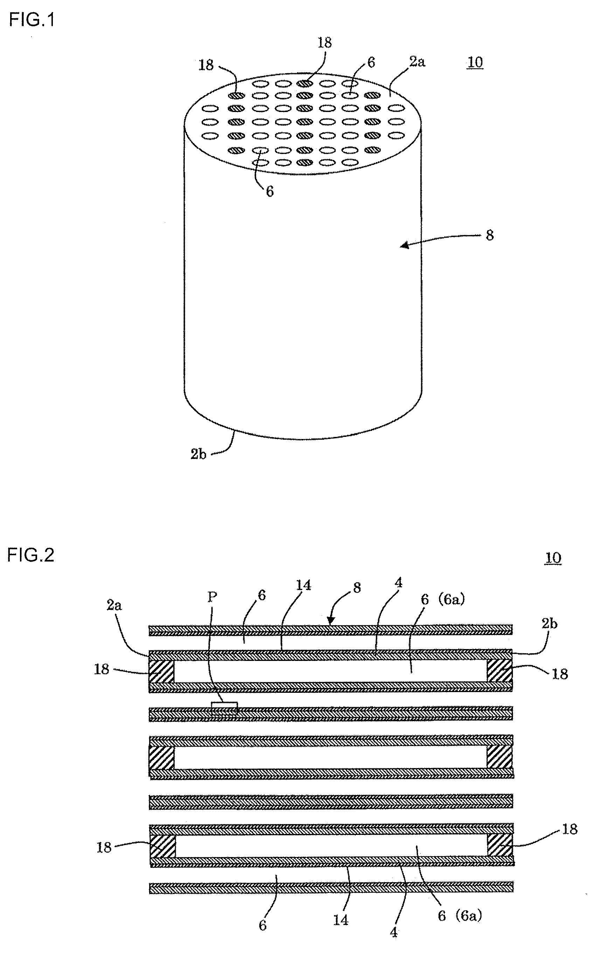

As shown in Figs. 1 to 3, a ceramic separation filter 10 that is one embodiment of the present invention includes a porous substrate 8 and a separation membrane 14 disposed on the porous substrate 8. The separation membrane 14 is a zeolite laminate including an outermost layer 15 made of zeolite that is located on the outermost surface side and an underlayer 16 made of zeolite that is located below the outermost layer 15. Then, the outermost layer of the separation membrane 14 in the ceramic separation filter 10 has a value of Si/Al ratio that is larger than that of the underlayer 16 of the separation membrane 14.

The ceramic separation filter 10 is configured so that the outermost layer 15 of the separation membrane 14 has a value of Si/Al ratio that is larger than that of the underlayer 16 of the separation membrane 14. In this way, the separation membrane 14 of the ceramic separation filter 10 is configured so that the outermost layer 15 having excellent acid resistance as compared with the underlayer 16 is disposed on the outermost surface side, and so this filter can exert acid resistance.

Specifically, since the outermost layer 15 of the ceramic separation filter 10 has high acid resistance, even when acetic acidic solution of high concentration exceeding 50 mass% (solution to be separated), for example, is a target of separation, the filter can exert favorable separation performance for long time. That is, the ceramic separation filter 10 hardly generates the problem of increasing acetic acid concentration in the permeated water after the use for a certain period of time. This is because the separation membrane 14 of the ceramic separation filter 10 is configured so that, even when acetic acid in the acetic acid solution passing through the outermost layer 15 reaches the underlayer 16, such acetic acid (acid component) has low concentration. This means that the underlayer 16 comes into contact with aqueous solution with the concentration of the acetic acid lower than that in the acetic acid solution. As a result, the underlayer 16 is hardly degraded due to the acetic acid. That is, the ceramic separation filter 10 has high acid resistance. In other words, the ceramic separation filter 10 has excellent durability for acidic aqueous solution.

Additionally the ceramic separation filter 10 has high separation performance and high water permeation speed at the underlayer 16 of the separation membrane 14. Herein, a larger value of Si/Al ratio means an increase of acid resistance of the separation membrane, but means deterioration in affinity for water. Therefore, a separation membrane having a large value of Si/Al ratio has a problem of having a slow water permeation speed and having low separation performance. Although the ceramic separation filter 10 does not have sufficient separation performance with the outermost layer 15 only, the ceramic separation filter includes the underlayer 16 that has high separation performance, and so the separation membrane as a whole can exert excellent separation performance. This is because as the concentration of an acid component of the solution to be separated by the underlayer 16 becomes lower, the water permeation speed at the layer increases. That is, the concentration of an acid component such as acetic acid supplied to the underlayer 16 becomes low because of the passage through the outermost layer 15 as stated above, and as compared with the separation filter including the underlayer 16 only as the separation membrane, the separation filter including the laminate can improve its separation performance and water permeation speed significantly.

In this way, the separation membrane 14 as a whole of the ceramic separation filter 10 has excellent advantageous effects (excellent separation performance and such acid resistance) that cannot be obtained from the outermost layer 15 or the underlayer 16 that is used alone as a separation membrane.

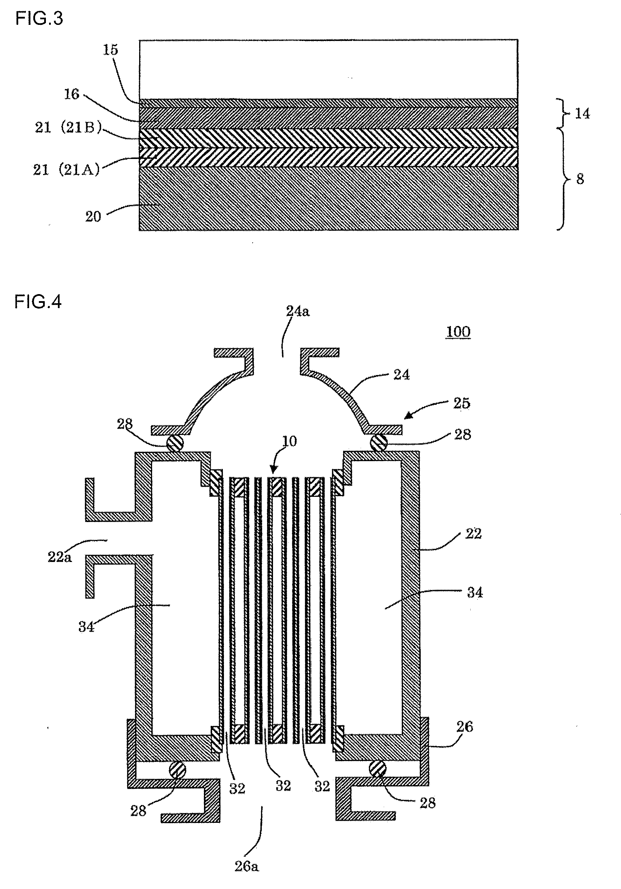

Fig. 1 is a perspective view schematically showing a ceramic separation filter that is one embodiment of the present invention. Fig. 2 is a cross-sectional view schematically showing a cross section of the ceramic separation filter shown in Fig. 1 that is parallel to the cell extending direction. Fig. 3 is an enlarged cross-sectional view schematically showing region P of Fig. 2.

[1-1] Separation membrane:

A separation membrane of a ceramic separation filter of the present invention includes an outermost layer made of zeolite that is located on the outermost surface side and an underlayer made of zeolite that is located below the outermost layer as stated above. Then, in the ceramic separation filter of the present invention, the outermost layer of the separation membrane has a value of Si/Al ratio that is larger than that of the underlayer. In this way, a layer having a value of Si/Al ratio that is larger than that of the underlayer located below the layer is disposed as the outermost layer that is located on the outermost surface side, whereby the separation membrane obtained can have excellent acid resistance and excellent separation performance. In the present specification, "a value of Si/Al ratio" means a value of a ratio of the number of Si atoms with respect to the number of Al atoms.

"The value of Si/Al ratio of the outermost layer" and "the value of Si/Al ratio of the underlayer" are calculated based on values measured for these layers using a scanning electron microscope - energy dispersive X-ray spectroscopy (SEM-EDX). Specifically, X-ray peak intensities corresponding to Si and Al are corrected by a ZAF correction method, thus finding a mass ratio, which is then converted into an atomic ratio using atomic weight of Si and Al. Note here that the value of Si/Al ratio of the underlayer is a value calculated for the underlayer before the outermost layer is formed thereon using a SEM-EDX.

The value of the Si/Al ratio of the underlayer is preferably 5 or less. The lower limit value of the Si/Al ratio of the underlayer is preferably 1.5. The upper limit value of the Si/Al ratio of the underlayer is preferably 4. When the value of the Si/Al ratio of the underlayer is 5 or less, the underlayer can have a high affinity for water, which means a high water permeation speed. If the value of the Si/Al ratio of the underlayer exceeds 5, the underlayer becomes highly hydrophobic (i.e., low hydrophilic), and so its separation performance may deteriorate.

The value of the Si/Al ratio of the outermost layer is preferably 7 or more. The lower limit value of the Si/Al ratio of the outermost layer is preferably 10, and is 20 especially preferably. The upper limit value of the Si/Al ratio of the outermost layer is preferably 200, and is 100 especially preferably. When the value of the Si/Al ratio of the outermost layer is 7 or more, the outermost layer can have high acid resistance. If the value of the Si/Al ratio of the outermost layer is less than 7, the outermost layer does not have sufficient acid resistance, and so when separation procedure is performed for a certain time period or longer, then the acetic acid concentration in the permeated water may increase.

The thickness of the outermost layer of the separation membrane is preferably 1/2 or less of the thickness of the underlayer. The lower limit value of the thickness of the outermost layer of the separation membrane is preferably 1/10 of the thickness of the underlayer. The upper limit value of the thickness of the outermost layer of the separation membrane is preferably 1/3 of the thickness of the underlayer. When the thickness of the outermost layer of the separation membrane is 1/2 or less of the thickness of the underlayer, this means that the outermost layer is a thin membrane (layer), and so the water permeation speed is improved. If the thickness of the outermost layer of the separation membrane exceeds 1/2 of the thickness of the underlayer, this means that the outermost layer is a thick membrane (layer), and so the water permeation speed becomes low, and so the separation performance may deteriorate. A crack may occur at the separation membrane (especially at the outermost layer) in that case, and the separation performance may deteriorate.

Specifically the thickness of the outermost layer of the separation membrane is preferably 0.01 to 7 $\mu$m. The lower limit value of the thickness of the outermost layer of the separation membrane is preferably 0.03 $\mu$m. The upper limit value of the thickness of the outermost layer of the separation membrane is preferably 4 $\mu$m. If the thickness of the outermost layer of the separation membrane is less than the lower limit value, the coating of the underlayer may not be sufficient, and so the underlayer may be exposed, and acid resistance may deteriorate. If the thickness of the outermost layer of the separation membrane exceeds the upper limit value, such a thick outermost layer lowers the water permeation speed, and so the separation performance may deteriorate. A crack may occur at the separation membrane (especially at the outermost layer) in that case, and the separation performance may deteriorate.

Specifically the thickness of the underlayer of the separation membrane is preferably 0.1 to 20 $\mu$m. The lower limit value of the thickness of the underlayer of the separation membrane is preferably 0.3 $\mu$m. The upper limit value of the thickness of the underlayer of the separation membrane is preferably 10 $\mu$m. If the thickness of the underlayer of the separation membrane is less than the lower limit value, the coating of the substrate by the underlayer may not be sufficient, and the substrate may be exposed, and the separation performance may deteriorate. If the thickness of the underlayer of the separation membrane exceeds the upper limit value, such a thick underlayer lowers the water permeation speed, and so the separation performance may deteriorate. A crack may occur at the separation membrane in that case, and the separation performance may deteriorate.

The overall thickness of the separation membrane is preferably 0.2 to 25 $\mu$m, for example. The lower limit value of the overall thickness of the separation membrane is preferably 0.4 $\mu$m. The upper limit value of the overall thickness of the separation membrane is preferably 15 $\mu$m. If the overall thickness of the separation membrane is less than the lower limit value, it becomes difficult to form the separation membrane uniformly, and the entire surface of the substrate may not be coated. That is, the separation membrane may not be disposed at a part where the separation membrane is to be disposed. In this case, the separation performance of the separation membrane may deteriorate. If the overall thickness of the separation membrane exceeds the upper limit value, pressure loss at the separation membrane increases, which lowers the water permeation speed, and so the separation performance may deteriorate.

The types of the outermost layer and the underlayer of the separation membrane are not limited especially as long as they are layers (membranes) made of zeolite. For instance, the outermost layer and the underlayer of the separation membrane may be layers made of chabazite-type zeolite, DDR-type zeolite, FAU-type zeolite, MOR-type zeolite or the like. Among them, the outermost layer and the underlayer each are made of chabazite-type zeolite, or are made of DDR-type zeolite preferably. When the outermost layer and the underlayer each are made of chabazite-type zeolite or when they are each made of DDR-type zeolite, selectivity of water is high during water-acetic acid separation, and so the separation performance is high. They further have a stable crystal structure even in an acid condition (hardly change in its crystal structure).

This separation membrane may include another layer in addition to the outermost layer and the underlayer. That is, the separation membrane may include a zeolite intermediate layer, for example, made of zeolite between the outermost layer and the underlayer as long as the outermost layer and the underlayer satisfy the aforementioned conditions. The zeolite intermediate layer preferably has a value of Si/Al ratio that is smaller than that of the outermost layer. It is more preferable that the outermost layer, the underlayer and the zeolite intermediate layer have their values of Si/Al ratio that are the largest at the outermost layer, and decreases from the outermost layer to lower layers.

The outermost layer and the underlayer made of zeolite may be made of the same zeolite type or of different zeolite types as long as their values of Si/Al ratio satisfy the aforementioned conditions. The zeolite separation filter of the present invention may be made of zeolite of the same type preferably. This is because the layers constituting the separation membrane have the same expansion coefficient, and so easy exfoliation of the layers can be prevented. The manufacturing process therefor also can be simplified. Herein, "be made of zeolite of the same type" means that, when the outermost layer is made of chabazite-type zeolite, the underlayer also is made of chabazite-type zeolite.

[1-2] Substrate:

A substrate is a porous support body to support a separation membrane. This substrate is porous and includes a plurality of pores formed therein. Thus, components separated by the separation membrane (e.g., water) can pass through the substrate while passing through the plurality of pores.

The substrate is made of ceramic preferably. Exemplary ceramic constituting the substrate include alumina ($Al_2O_3$), titania ($TiO_2$), mullite ($Al_2O_3$-$SiO_2$), zirconia ($ZrO_2$) or silica ($SiO_2$). Among them, alumina is preferable from the viewpoint of high corrosion resistance.

The substrate preferably has an average pore size that can be decided with consideration given to balance among the mechanical strength, surface roughness of the substrate, water permeation amount and the like. The average pore size of the substrate is preferably 0.01 to 1.0 $\mu$m. The lower limit value of the average pore size of the substrate is preferably 0.05 $\mu$m. The upper limit value of the average pore size of the substrate is preferably 0.5 $\mu$m. Such a range of the average pore size of the substrate allows the underlayer to be formed easily to be a thin membrane having a thickness of 20 $\mu$m or less. If the average pore size of the substrate is less than the lower limit value, pressure loss during the separation process may increase. If the average pore size of the substrate exceeds the upper limit value, it may be difficult to form the underlayer with a uniform thickness on the surface of a wall that defines and forms cells of the substrate. The average pore size of the substrate is a value measured by a bubble point method.

The substrate preferably has porosity that is 25 to 45%. The lower limit value of the porosity of the substrate is 30%, more preferably. The upper limit value of the porosity of the substrate is 40%, more preferably. If the porosity of the substrate is less than the lower limit value, the permeation amount of components to be separated (e.g., water in acidic aqueous solution) passing through the ceramic separation filter may be less. If the porosity of the substrate exceeds the upper limit value, the strength of the substrate may deteriorate. The porosity of the substrate is a value measured by an Archimedes method.

The substrate may have a shape such as a monolith shape, a honeycomb shape, a disk shape, a polygonal plate shape, a cylindrical shape such as a circular cylinder or a square cylinder or a columnar shape such as a circular column or a prism. Among them, a monolith shape and a honeycomb shape are preferable because the ratio of membrane area with respect to the volume and the weight is large. Herein, a "monolith shape" is a shape where a plurality of cells extending from one end face to the other end face is defined and formed. In other words, this may be called a shape like a lotus root.

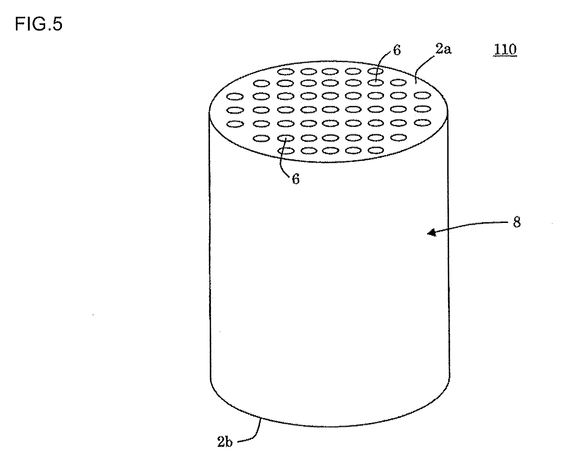

Specifically the substrate is preferably a substrate 8 (hereinafter this may be referred to as "a monolith substrate") as shown in Figs. 1 and 2 that is made of ceramic and including a wall 4 that defines and forms a plurality of cells 6 extending from one end face 2a to the other end face 2b. When such a monolith substrate is used, the separation membrane is preferably formed on the surface of the wall 4 of the substrate 8 (the surface of the wall 4 that defines and forms the cells 6 of the substrate 8) as shown in Fig. 2. Such a structured ceramic separation filter has more favorable separation performance. The monolith substrate of the ceramic separation filter may include plugging portions 18 for plugging of the open frontal areas of predetermined cells 6 of the substrate 8 as in the ceramic separation filter 10 shown in Figs. 1 to 3. In another configuration, a plugging portion may not be disposed for plugging of cells 6 as in a ceramic separation filter 110 shown in Fig. 5. Fig. 5 is a perspective view schematically showing another embodiment of a ceramic separation filter of the present invention.

The monolith substrate includes a plurality of cells formed therein, and the number of cells or the like is not limited especially. For instance, the cells of the monolith substrate may have a shape (the shape of a cell at a cross section that is perpendicular to the fluid flowing direction) such as a circle, an ellipse, a rectangle, a hexagon or a triangle. Among them, a circle is preferable, because it enables the formation of a separation membrane having a uniform thickness on the surface of a wall defining the cells.

The monolith substrate preferably has an opening diameter of the cells that is 1 to 5 mm. The opening diameter of the cells of 1 mm or more can achieve a sufficient area of the separation membrane formed at the surface of the wall defining and forming the cells of the monolith substrate. The opening diameter of the cells defined and formed by the wall of 5 mm or less can achieve sufficient strength of the monolith substrate.

The monolith substrate may have a size that can be set appropriately suitable for the purpose while satisfying the necessary strength as a supporting body of the separation membrane and not interfering with the permeability of the components to be separated. For instance, in the case of a circular columnar monolith substrate, it may have a diameter of 2 to 200 mm and the length in the cell extending direction of 10 to 2,000 mm.

As shown in Fig. 3, the monolith substrate preferably includes a substrate main body 20 and an intermediate layer 21 having a plurality of pores formed at the surface of the wall 4 that defines and forms the cells 6 of the substrate main body 20. The substrate main body 20 is made of ceramic and includes the wall 4 that defines and forms the plurality of cells 6 extending from the one end face 2a to the other end face 2b. The pores of the intermediate layer 21 may have an average pore size that is smaller than the average pore size of the substrate main body 20 and is larger than the average pore size of the separation membrane. The intermediate layer may be a single layer or may include a plurality of layers. Such an intermediate layer 21 can collect aggregate particles in slurry for separation membrane formation during the process to form the separation membrane 14. This can prevent the aggregate particles from entering in pores of the substrate main body 20. The intermediate layer 21 shown in Fig. 3 includes two intermediate layers 21A, 21B. The average pore size of the pores of the intermediate layer 21 specifically may be about 0.005 to 2 $\mu$m.

The substrate main body 20 and the intermediate layer 21 may be made of the materials that are described above as the materials (ceramic) of the substrate. When the substrate includes a substrate main body and an intermediate layer, the average pore size and the porosity of the substrate refer to the average pore size and the porosity of the substrate main body.

The monolith substrate is preferably provided with a seal portion made of an impermeable material such as glass at, at least, one of the one end face and the other end face. That is, the monolith substrate is preferably applied with the seal member at, at least, one of the one end face and the other end face. Such a seal portion provided can prevent the mixture of a target subjected to separation (e.g., acidic aqueous solution) existing in the first space and permeated liquid (e.g., water) existing in the second space. The first space and the second space are described later. Especially preferably the monolith substrate is provided with the seal portions formed at both of the one end face and the other end face. Especially preferably the monolith substrate is coated with the seal portion also at an end part of a side face of the substrate. The seal portion is not formed at the open frontal area of the cells. When the end part of a side face of the substrate is further applied, the applying portion at the end part of a side face preferably has a length (length in the cell extending direction) of 10 to 30 mm.

The monolith substrate may include, at open frontal areas of both ends of predetermined cells, porous plugging portions for plugging of the open frontal areas. The plugging portions may be made of the same material as that of the substrate. The plugging portions may have an average pore size and porosity that can be set appropriately in the same range as that of the aforementioned average pore size and porosity of the substrate. The ceramic separation filter 10 shown in Figs. 1 and 2 includes, at open frontal areas of both ends of water-intake cells 6a (6) as predetermined cells, plugging portions 18 for plugging of these open frontal areas.

When the monolith substrate includes the plugging portions, the cells (water-intake cells) with the plugging portions displaced include a discharge through channel to let the water-intake cells communicate with the external space. This discharge through channel can be formed by boring a through hole at the wall of the substrate before firing from the outer peripheral face of the substrate to the water-intake cells using a sharp jig.

[2] Method for manufacturing a ceramic separation filter:

A ceramic separation filter of the present invention can be manufactured as follows, for example.

[2-1] Preparation of substrate:

Firstly binder, surfactant and a pore former are mixed with ceramic powder, to which a dispersion medium and water are added and kneaded, thus obtaining a kneaded material. Next, the thus obtained kneaded material is extruded to prepare a monolith-shaped formed body having a plurality of cells extending from one end face to the other end face. Next, the thus obtained formed body is dried and fired, whereby a monolith-shaped porous fired body is prepared.

The formed body may be dried, for example, by electromagnetic wave heating such as drying by microwave heating or high-frequency dielectric heating. Before firing of the dried formed body, calcination may be performed. This calcination is performed for degreasing. The calcination may be performed, for example, at 550°C for about 3 hours in an oxidation atmosphere. Firing (main firing) is a heating process to sinter the ceramic powder for densification to achieve a predetermined strength. Conditions for firing (temperature, time) depend on the types of ceramic powder, and so appropriate conditions may be selected suitably for the type.

Next, an intermediate layer is formed on the surface of a wall that defines and forms cells of the obtained fired body, thus preparing an intermediate-layer formed fired body (substrate before forming sealing portion). The intermediate layer may be formed by a filtration deposition method, for example.

Next, glass paste is applied at both end faces of the thus prepared intermediate layer-formed fired body, followed by firing. In this way, a fired body with sealing portions formed at the both ends (monolith-shaped substrate) is obtained.

[2-2] Formation of separation membrane:

Next, a separation membrane including an outermost layer and an underlayer is formed on the obtained monolith-shaped substrate. Specifically, the underlayer is firstly formed, followed by the formation of the outermost layer on the formed underlayer.

[2-2-1] Formation of underlayer:

The underlayer made of zeolite may be formed by a conventionally known method.

[2-2-1a] Formation of underlayer made of chabazite-type zeolite membrane:

To form an underlayer made of chabazite-type zeolite (CHA-type zeolite), for example, chabazite seed crystal (CHA seed crystal) is firstly prepared. This chabazite seed crystal may be prepared based on a known method, e.g., a structural conversion method of FAU-type zeolite described in M.Itakura et al., Chemistry Letters vol.37, No.9(2008)908, for example. Next, the prepared CHA seed crystal as it is or pulverized as needed is dispersed in water, thus preparing seed-crystal dispersed liquid. Coarse particles may be removed therefrom as needed. Next, the thus obtained seed crystal dispersed liquid is adjusted so that the concentration of the CHA seed crystal is 0.001 to 0.3 mass%, thus preparing slurry liquid for seeding. This slurry liquid for seeding is allowed to flow into the cells of the substrate, so as to form a coating membrane made of the slurry liquid for seeding on the surface of the wall defining and forming the cells of the substrate, followed by draft drying. In this way, an "underlayer seeding substrate" is prepared.

Next, membrane synthesis liquid to form a membrane of chabazite-type zeolite is prepared. The membrane synthesis liquid contains silica sol as Si source, aluminum nitrate ($Al(NO_3)_3$) as Al source and the like, and may be prepared by a method described in JP-A-2011-16123, for example. Then, the aforementioned "underlayer seeding substrate" is immersed in the thus prepared membrane synthesis liquid for heating (hydrothermal synthesis), followed by firing. In this way, a substrate (underlayer formed substrate) including an underlayer made of chabazite-type zeolite membrane is prepared.

When the underlayer made of chabazite-type zeolite membrane is formed by the above method, the value of Si/Al ratio of the underlayer can be adjusted by adjusting the mixture ratio of the Si source (e.g., silica sol) and the Al source (e.g., aluminum nitrate) in the membrane synthesis liquid.

[2-2-1b] Formation of underlayer made of DDR-type zeolite membrane:

To form an underlayer made of DDR-type zeolite, for example, DDR-type zeolite seed crystal is firstly prepared. This DDR-type zeolite seed crystal may be prepared based on a known method, e.g., a method to manufacture DDR-type zeolite described in JP-A-2004-083375. Next, similarly to the case of preparing CHA seed crystal, the prepared DDR-type zeolite seed crystal as it is or pulverized as needed is dispersed in water, thus preparing seed-crystal dispersed liquid. Coarse particles may be removed therefrom as needed. Next, the thus prepared seed crystal dispersed liquid is adjusted so that the concentration of the DDR-type zeolite seed crystal is 0.001 to 0.3 mass%, thus preparing slurry liquid for seeding. This slurry liquid for seeding is allowed to flow into the cells of the substrate, so as to form a coating film made of the slurry liquid for seeding on the surface of the wall defining and forming the cells of the substrate, followed by draft drying. In this way, an "underlayer seeding substrate" is prepared.

Next, solution containing 1-adamantaneamine, in which ethylenediamine is dissolved, is prepared. Next, silica sol and sodium aluminate ($NaAlO_2$) are added to the solution, thus preparing raw material solution. Then, the aforementioned "underlayer seeding substrate" is immersed in the raw material solution for heating (hydrothermal synthesis), followed by drying. Next, organic molecules (1-adamantaneamine) as a casting agent are removed by heating. In this way, a substrate (underlayer formed substrate) including an underlayer made of DDR-type zeolite membrane is prepared.

When the underlayer made of DDR-type zeolite membrane is formed by the above method, the value of Si/Al ratio of the underlayer can be adjusted by adjusting the mixture ratio of the Si source (e.g., silica sol) and the Al source (e.g., sodium aluminate) in the raw material solution.

The thickness of the underlayer can be adjusted by changing the time of hydrothermal synthesis.

[2-2-2] Formation of outermost layer:

Next, an outermost layer is formed. An outermost layer made of zeolite may be formed by a conventionally known method.

[2-2-2a] Formation of outermost layer made of chabazite-type zeolite membrane:

To form an outermost layer made of chabazite-type zeolite (CHA-type zeolite), for example, chabazite seed crystal (CHA seed crystal) is firstly prepared. This CHA seed crystal may be prepared based on a structural conversion method of FAU-type zeolite, for example. A structural conversion method of FAU-type zeolite may be the method described in M.Itakura et al., Chemistry Letters vol.37, No.9(2008)908, for example. Next, the prepared CHA seed crystal as it is or pulverized as needed is dispersed in water, thus preparing seed-crystal dispersed liquid. Coarse particles may be removed therefrom as needed. Next, the thus obtained seed crystal dispersed liquid is adjusted so that the concentration of the CHA seed crystal is 0.001 to 0.3 mass%, thus preparing slurry liquid for seeding. This slurry liquid for seeding is allowed to flow into the cells of the substrate, so as to form a coating member made of the slurry liquid for seeding on the surface of the wall defining and forming the cells of the substrate, followed by draft drying. In this way, an "outermost layer seeding substrate" is prepared.

Next, a CHA-type zeolite membrane is formed on the underlayer of the outermost layer seeding substrate by a structural conversion method of FAU-type zeolite. Specifically, raw material solution containing FAU-type zeolite is prepared, and then the "outermost layer seeding substrate" is immersed in the raw material solution containing FAU-type zeolite for heating (hydrothermal synthesis), followed by firing. In this way, a chabazite-type zeolite membrane (CHA-type zeolite membrane) is formed on the underlayer of the outermost layer seeding substrate. The FAU-type zeolite used in the raw material solution may be a commercially available product as it is or a commercially available product that is dealuminization-treated with sulfuric acid. This FAU-type zeolite can be adjusted appropriately based on the relationship with other components (components other than FAU-type zeolite) contained in the raw material solution and there is no particular limitation on the value of Si/Al ratio. That is, the value of Si/Al ratio of the FAU-type zeolite is not limited especially as long as the value of the Si/Al ratio at the outermost layer is satisfied, i.e., the amount of the Si source and the Al source is fulfilled.

The "outermost layer made of chabazite-type zeolite membrane" may be formed by the method described in the above "[2-2-1a] Formation of underlayer made of chabazite-type zeolite membrane". For example, the chabazite seed crystal used for the "outermost layer made of chabazite-type zeolite membrane" may be the same one as the chabazite seed crystal prepared at the "Formation of underlayer made of chabazite-type zeolite membrane" in the above or may be different (may be prepared separately). When it is prepared separately, the value of Si/Al ratio of the chabazite seed crystal may be the same or different. The aforementioned "underlayer made of chabazite-type zeolite membrane" may be formed by the method described in the above "[2-2-2a] Formation of outermost layer made of chabazite-type zeolite membrane".

[2-2-2b] Formation of outermost layer made of DDR-type zeolite membrane:

To form an outermost layer made of DDR-type zeolite, for example, DDR-type zeolite crystal powder is firstly prepared. Then this prepared DDR-type zeolite crystal powder is used as it is or is pulverized as needed, thus preparing seed-crystal. The obtained seed crystal is dispersed in water, and then coarse particles are removed therefrom as needed, thus obtaining seed crystal dispersed liquid. Herein, the DDR-type zeolite crystal powder may be prepared by a known method. For instance, it may be manufactured by methods to manufacture DDR-type zeolite described in M. J. den Exter, J. C. Jansen, H. van Bekkum, Studies in Surface Science and Catalysis vol.84, Ed. by J. Weitkamp et al., Elsevier (1994)1159-1166 and JP-A-2004-083375.

Next, the obtained seed crystal dispersed liquid is diluted for adjustment with ion exchanged water or ethanol so that the concentration of the DDR-type zeolite is 0.001 to 0.36 mass%, thus preparing slurry liquid for seeding. Next, the slurry liquid for seeding is allowed to flow into the cells of the aforementioned "substrate having an underlayer" so as to pass through the cells, followed by draft drying. In this way, an "outermost layer seeding substrate" is prepared.

Next, solution containing 1-adamantaneamine, in which ethylenediamine is dissolved, is prepared. Next, silica sol and sodium aluminate are added to the obtained solution, thus preparing raw material solution. Then, the aforementioned "outermost layer seeding substrate" is immersed in the raw material solution for heating (hydrothermal synthesis), followed by drying. Next, organic molecules (1-adamantaneamine) as a casting agent are removed by heating. In this way, an outermost layer made of DDR-type zeolite membrane can be formed on the underlayer of the outermost layer seeding substrate.

When the outermost layer made of DDR-type zeolite membrane is formed by the above method, the value of Si/Al ratio of the outermost layer can be adjusted by adjusting the ratio of Si/Al in the raw material solution similarly to the case of the underlayer (DDR-type zeolite membrane). Specifically, the mixture ratio of the Si source (silica sol) and the Al source (sodium aluminate) in the raw material solution may be adjusted, whereby the Si/Al ratio can be made larger than the Si/Al ratio of the underlayer.

The "outermost layer made of DDR-type zeolite membrane" may be formed by the method described in the above "[2-2-1b] Formation of underlayer made of DDR-type zeolite membrane". For example, the seed crystal used for the "outermost layer made of DDR-type zeolite membrane" may be the same one as the DDR-type zeolite crystal (seed crystal) prepared at the "Formation of underlayer made of DDR-type zeolite membrane" or may be different (may be prepared separately). When it is prepared separately, the value of Si/Al ratio of the DDR-type zeolite crystal may be the same or different. The aforementioned "underlayer made of DDR-type zeolite membrane" may be formed by the method described in the above "[2-2-2b] Formation of outermost layer made of DDR-type zeolite membrane".

The thickness of the outermost layer can be adjusted by changing the time of hydrothermal synthesis.

In this way, a ceramic separation filter can be manufactured, including a porous substrate and a separation membrane formed on a surface of a wall defining and forming cells of the substrate.

[3] Dehydration method:

A dehydration method that is one embodiment of the present invention is to let water in acidic aqueous solution selectively pass through from a first space 32 (see Fig. 4) to a second space 34 (see Fig. 4), thus removing water from the acidic aqueous solution. A space that is divided by the separation membrane 14 of the ceramic separation filter 10 on the surface side of the separation membrane 14 of the ceramic separation filter 10 is referred to as the first space 32. A space that is divided by the separation membrane 14 of the ceramic separation filter 10 on the rear face side of the separation membrane 14 of the ceramic separation filter 10 is referred to as the second space 34. In the dehydration method of the present embodiment, the second space 34 between the first space 32 and the second space 34 is reduced in pressure less than atmospheric pressure, and in this state, acidic aqueous solution is supplied to the first space 32 so as to cover the surface of the separation membrane 14. Then, water in the acidic aqueous solution is allowed to selectively pass through from the first space 32 to the second space 34, whereby water is removed from the acidic aqueous solution.

The dehydration method of the present invention uses a ceramic separation filter of the present invention as a filter (ceramic separation filter) for dehydration. Therefore, dehydration processing can be performed for long time while keeping excellent separation performance even when water is to be removed from acidic aqueous solution.

Herein, "so as to cover the surface of the separation membrane 14" means to cover the entire surface of the outermost layer 15 of the separation membrane 14.

The dehydration method of the present embodiment can remove water from the acidic aqueous solution using the dehydration apparatus 100 shown in Fig. 4. The dehydration apparatus 100 shown in Fig. 4 includes a ceramic separation filter 10 and a storage vessel 25 to store the ceramic separation filter 10. Fig. 4 is a cross sectional view schematically showing a dehydration apparatus used for a dehydration method that is one embodiment of the present invention.

The storage vessel 25 includes a hollow tubular storage vessel main body 22, an upper cap 24 attached to an upper end of the storage vessel main body, and a bottom cap 26 attached to a lower end of the storage vessel main body. A filtrate outlet 22a to let out permeated liquid is formed in the vicinity of the upper end part of the storage vessel main body 22. A raw liquid discharge port 24a to discharge a target to be separated (acidic aqueous solution) is formed at the top of the upper cap 24. A raw liquid supply port 26a, through which a target to be separated can be supplied to the ceramic separation filter 10, is formed at the lower end part of the bottom cap 26. Then, these openings are provided with flanges. These flanges facilitate the coupling of a "pipe connecting the storage vessel 25 and another member" with the storage vessel 25. An O-ring 28 made of an elastic material is disposed between the storage vessel main body 22 and the upper cap 24, and between the storage vessel main body 22 and the bottom cap 26. The storage vessel 25 is made of a material (e.g., stainless steel) that is water-impermeable and is resistant to corrosion.

Exemplary acidic aqueous solution includes acetic acid solution or sulfuric acid solution.

Conditions of the dehydration method of the present invention, such as a temperature of the acidic aqueous solution, can be changed appropriately depending on the acidic aqueous solution used. The temperature of the acidic aqueous solution specifically may be at 50 to 150°C.

The pressure in the second space 34 is not limited especially as long as it is reduced in pressure less than atmospheric pressure. The second space 34 is preferably reduced in pressure so that a difference in pressure between the first space 32 and the second space 34 is 0.05 to 1 MPa.

The pressure in the second space 34 specifically may be 0.001 to 0.1 MPa.

[Examples]

The following describes the present invention in more details by way of examples, and the present invention is not limited to the following examples.

(Example 1)

(1) Preparation of substrate:

Firstly a substrate main body having a monolith shape and being made of alumina was prepared, having a wall that defines and forms a plurality of cells extending from one end face to the other end face. This substrate main body had a diameter of 30 mm, had a length in the cell extending direction of 160 mm and an opening diameter of the cells of 2.5 mm. The number of the cells was 55. The average pore size of the wall was 10 $\mu$m and the porosity of the wall was 35%. Next, an intermediate layer 21 (21A) (see Fig. 3) made of alumina as a main component, having a thickness of 100 $\mu$m and an average pore size of 0.5 $\mu$m, was formed by a filtration deposition method on the surface of the wall that defines and forms the cells of this substrate main body. Next, an intermediate layer 21 (21B) (see Fig. 3) made of alumina as a main component, having a thickness of 10 $\mu$m and an average pore size of 0.1 $\mu$m, was formed by a filtration deposition method on the surface of the intermediate layer 21 (21A). In this way, a substrate before forming a sealing portion was prepared. Next, glass paste was applied to both end faces of the prepared "substrate before forming a sealing portion", followed by firing, thus forming sealing portions at both end faces of the "substrate before forming a sealing portion", whereby the substrate was prepared.

(2) Formation of separation membrane:

Next, a separation membrane was formed on the surface of the wall that defines and forms the cells of the prepared substrate as follows. Specifically an underlayer was formed on the surface of the wall, and then an outermost layer was formed on the underlayer, thus forming a separation membrane.

(2-1) Formation of underlayer:

A membrane made of chabazite-type zeolite (chabazite-type zeolite membrane) was formed as an underlayer on the surface of the wall that defines and forms the cells of the prepared substrate. Specifically the underlayer was formed as follows.

(2-1-1) Preparation of chabazite seed crystal:

Firstly, chabazite seed crystal (CHA seed crystal) was prepared based on the method described in JP-A-2011-16123 to manufacture a CHA-type zeolite membrane. Next, this CHA seed crystal was dispersed in water, thus preparing seed crystal dispersed liquid. The prepared CHA seed crystal had a value of Si/Al ratio of 2.

(2-1-2) Preparation of underlayer seeding substrate (particle attachment process):

Next, the prepared seed crystal dispersed liquid was adjusted so that the concentration of the CHA seed crystal was 0.02 mass%, thus preparing slurry liquid for seeding. Then, the substrate was fixed to a lower end of a wide-mouthed funnel so that the one end face is directed upward. Then, 160 ml of the slurry liquid for seeding was poured into the wide-mounted funnel so that the slurry liquid for seeding was supplied from the wide-mounted funnel to the substrate, and so was allowed to pass through the cells of the substrate. In this way, a coating membrane made of the slurry liquid for seeding was formed on the surface of the wall that defines and forms the cells of the prepared substrate. Then, air at a room temperature was sent at the air velocity of 5 m/sec. and allowed to flow into the cells of the substrate for 10 minutes to draft dry the coating member. In this way, an "underlayer seeding substrate" was prepared so that CHA seed crystal was attached to the surface of the wall of the substrate.

(2-1-3) Formation of CHA-type zeolite membrane (membrane formation process):

Next, membrane synthesis liquid was prepared based on the method described in JP-A-2011-16123 to prepare membrane synthesis liquid. This membrane synthesis liquid was prepared by mixing silica sol ("Cataloid SI-30" produced by Catalysts & Chemicals Ind. Co., Ltd) and 50% aluminum nitrate ($Al(NO_3)_3$) aqueous solution at the ratio such that the value of Si/Al ratio in the membrane after hydrothermal synthesis was 2. Then, the "underlayer seeding substrate" was disposed in an inner cylinder of a stainless-steel pressure-resistant container (having a fluoro-resin inner cylinder with internal volume of 300 ml). Then, the prepared membrane synthesis liquid was put in the inner cylinder, to which heat was applied (hydrothermal synthesis) at 120°C for 10 days. After hydrothermal synthesis, it was cooled and then washed adequately, followed by drying at 70°C for 16 hours. Then firing was performed at 550°C for 10 hours. In this way, an "underlayer formed substrate" including a chabazite-type zeolite membrane (CHA-type zeolite membrane) formed on the surface of the wall of the substrate was prepared. The chabazite-type zeolite membrane formed on the surface of the wall of the substrate was the underlayer.

(2-2) Formation of outermost layer:

Next, a chabazite-type zeolite membrane (outermost layer) having a value of Si/Al ratio larger than that of the underlayer was formed on the underlayer made of chabazite-type zeolite membrane. The outermost layer was formed specifically as follows.

(2-2-1) Preparation of chabazite seed crystal:

Firstly chabazite seed crystal (CHA seed crystal) was prepared based on a structural conversion method of FAU-type zeolite. Next, this CHA seed crystal was dispersed in water, thus preparing seed crystal dispersed liquid. The structural conversion method of FAU-type zeolite used was described in M.Itakura et al., Chemistry Letters vol.37, No.9(2008)908. The thus prepared CHA seed crystal had a value of Si/Al ratio of 5.

(2-2-2) Preparation of outermost layer seeding substrate (particle attachment process):

Next, the prepared seed crystal dispersed liquid was adjusted so that the concentration of the CHA seed crystal was 0.02 mass%, thus preparing slurry liquid for seeding. Then, similarly to the case of forming the underlayer, the substrate was fixed so that the one end face is directed upward. Then, 160 ml of the slurry liquid for seeding was poured, and so was allowed to pass through the cells of the substrate. In this way, a coating membrane made of the slurry liquid for seeding was formed on the underlayer of the underlayer formed substrate. Then, air at a room temperature was sent at the air velocity of 5 m/sec. and allowed to flow into the cells of the substrate for 10 minutes to draft dry the coating membrane. In this way, an "outermost layer seeding substrate" was prepared so that CHA seed crystal was attached on the underlayer of the substrate.

(2-2-3) Formation of CHA-type zeolite membrane (membrane formation process):

Next, a CHA-type zeolite membrane was formed on the underlayer of the outermost layer seeding substrate by a structural conversion method of FAU-type zeolite. Specifically FAU-type zeolite, benzyltrimethyl ammonium, sodium chloride and ion exchanged water were put in a wide-mouthed jar made of fluoro resin. The FAU-type zeolite used was prepared by dealuminization-treating FAU-type zeolite "HSZ-331HSA" produced by Tosoh Corporation with 1M sulfuric acid solution at 75°C for 5 hours. These components were adjusted to be $SiO_2$: $0.1Al_2O_3$: 0.2BTMA: 0.1NaCl: $10H_2O$ and have the quantity of solution of 200 g so that the Si/Al ratio after hydrothermal synthesis was 5. Then, it was stirred for 1 hour. In this way, raw material solution was prepared. Then, the "outermost layer seeding substrate" was disposed in an inner cylinder of a stainless-steel pressure-resistant container (having a fluoro-resin inner cylinder with internal volume of 300 ml). Then, the prepared raw material solution was put in the inner cylinder, to which heat was applied (hydrothermal synthesis) at 120°C for 10 days. After hydrothermal synthesis, it was cooled and then washed adequately, followed by drying at 70°C for 16 hours. Then firing was performed at 550°C for 10 hours. In this way, a chabazite-type zeolite membrane (CHA-type zeolite membrane) was formed on the underlayer of the outermost layer seeding substrate. This chabazite-type zeolite membrane formed on the underlayer was the outermost layer. In this way, a ceramic separation filter was prepared, including a substrate and a separation membrane formed on the surface of a wall that defines and forms cells of the substrate.

The thus prepared ceramic separation filter was cut in the direction perpendicular to the cell extending direction, and the cut cross section was observed using a scanning electron microscope. The result showed that the ceramic separation filter prepared by the present embodiment had a thickness of the outermost layer of 3 $\mu$m and a thickness of the underlayer of 7 $\mu$m. It had a value of Si/Al ratio at the outermost layer of 5 and a value of Si/Al ratio at the underlayer of 2. The value of Si/Al ratio of the underlayer was a value calculated for the underlayer at the "underlayer formed substrate" before the outermost layer was formed thereon.

The thus prepared ceramic separation filter was evaluated by a separation test and for its durability by the following methods.

[Separation test]

Using a dehydration apparatus shown in Fig. 4, acetic acid solution at 90°C was allowed to flow through the cells (first space) of the thus prepared ceramic separation filter at a liquid supply speed of 10 L/min, and the pressure in the second space was reduced to the vacuum degree of 13.3 kPa. The acetic acid solution used was aqueous solution containing 90 mass% of acetic acid and 10 mass% of water. Next, permeated liquid (i.e. components removed by the ceramic separation filter) permeated to the second space was trapped with a liquid nitrogen trap. This permeated liquid was trapped for 1 hour, and the mass of the trapped permeated liquid and the acetic acid concentration (mass%) in the permeated liquid were measured. The acetic acid concentration (mass%) in the permeated liquid was measured by titration. Then, the water permeated speed was calculated by the following expression.

$$\text{Expression: Water permeated speed } (kg/m^2 h) = W \times (1-$$

$$(C/100))/\text{area of separation membrane/trapping time of}$$

$$\text{permeated liquid,}$$

where W represents the mass (kg) of the permeated liquid trapped, and C represents the acetic acid concentration (mass%) in permeated liquid.

[Durability]

Such a [separation test] was continuously performed, and "time until the acetic acid concentration in the permeated water increased to 1.5 times the value after 50 hours passed after the starting of the test" was measured. Durability was evaluated based on the length of this measurement time. Table 1 shows the results.

In Table 1, "DDR" in the fields of "material" of "outermost layer" and "underlayer" represents a DDR-type zeolite membrane. "CHA" represents a CHA-type zeolite membrane. The fields of "Si/Al ratio" of "outermost layer" and "underlayer" represent the values of Si/Al ratio of the zeolite membrane.

[Table 1]

| | Outermost layer | | | Underlayer | | | Acetic acid concentration in permeated liquid (mass%) | Water permeated speed (kg/m²h) | Durability (hours) |
|---|---|---|---|---|---|---|---|---|---|
| | Material | Si/Al ratio | Thickness (μm) | Material | Si/Al ratio | Thickness (μm) | | | |
| Comp.Ex. 1 | None | - | - | CHA | 2 | 10 | 0.05 | 2.0 | 50 |
| Comp.Ex. 2 | None | - | - | CHA | 20 | 10 | 0.30 | 1.0 | 500 or more |
| Ex. 1 | CHA | 5 | 3 | CHA | 2 | 7 | 0.02 | 2.3 | 200 |
| Ex. 2 | CHA | 10 | 3 | CHA | 2 | 7 | 0.03 | 2.2 | 400 |
| Ex. 3 | CHA | 20 | 3 | CHA | 2 | 7 | 0.03 | 2.1 | 500 or more |
| Ex. 4 | CHA | 20 | 3 | CHA | 4 | 7 | 0.04 | 2.0 | 500 or more |
| Ex. 5 | CHA | 20 | 5 | CHA | 2 | 5 | 0.04 | 1.5 | 500 or more |
| Ex. 6 | DDR | 90 | 3 | DDR | 2 | 7 | 0.04 | 2.1 | 500 or more |

(Examples 2 to 5, Comparative Examples 1, 2)

Ceramic separation filters were prepared similarly to Example 1 except that their outermost layers and underlayers satisfied the conditions shown in Table 1. Then, similarly to Example 1, the thus prepared ceramic separation filters were evaluated by a separation test and for durability. Table 1 shows the results.

The values of Si/Al ratio of the outermost layer and the underlayer were adjusted to desired values by adjusting the mixture ratio of the Si source and the Al source in the raw material solution in the membrane formation process. The thicknesses of the outermost layer and the underlayer were adjusted to desired values by adjusting time of hydrothermal synthesis.

(Example 6)

(1) Preparation of substrate:

Firstly a substrate was prepared similarly to Example 1.

(2) Formation of separation membrane:

A separation membrane was formed on the surface of a wall that defines and forms cells of the prepared substrate. Specifically an underlayer made of DDR-type zeolite membrane was formed on the surface of the wall, and then an outermost layer made of DDR-type zeolite membrane was formed on this underlayer, thus preparing a separation membrane.

(2-1) Formation of underlayer:

A membrane made of DDR-type zeolite (DDR-type zeolite membrane) was formed as an underlayer on the surface of the wall that defines and forms cells of the prepared substrate. Specifically the underlayer was formed as follows.

(2-1-1) Preparation of DDR-type zeolite seed crystal:

Firstly, DDR-type zeolite crystal powder was prepared based on a method described in JP-A-2004-083375 to manufacture DDR-type zeolite. Then, the prepared DDR-type zeolite crystal powder was pulverized, whereby DDR-type zeolite seed crystal was obtained. The obtained DDR-type zeolite seed crystal was dispersed in water, whereby seed crystal dispersed liquid was prepared. The prepared DDR-type zeolite seed crystal had a value of Si/Al ratio of 90.

(2-1-2) Preparation of underlayer seeding substrate (particle attachment process):

Next, the prepared seed crystal dispersed liquid was diluted for adjustment with ion exchanged water so that the concentration of the DDR-type zeolite crystal powder was 0.02 mass%. Then, the resultant was stirred with a stirrer at 300 rpm, whereby slurry liquid for seeding was obtained. Next, the substrate was fixed to a lower end of a wide-mouthed funnel so that one end face was directed upward. Then, 160 ml of the slurry liquid for seeding was poured into the wide-mounted funnel so that the slurry liquid for seeding was supplied from the wide-mounted funnel to the substrate, and so was allowed to pass through the cells of the substrate. In this way, a coating membrane made of the slurry liquid for seeding was formed on the surface of the wall that defines and forms the cells of the prepared substrate. Then, air at a room temperature was sent at the air velocity of 3 m/sec. and allowed to flow into the cells of the substrate for 10 minutes to draft dry the coating membrane. This "operation of pouring the slurry liquid for seeding, followed by draft drying" was repeated three times, whereby an "underlayer seeding substrate" was prepared so that DDR-type zeolite seed crystal was attached to the surface of the wall of the substrate. Herein, the attachment of DDR-type zeolite seed crystal to the wall surface of the substrate was checked by microstructure observation using an electron microscope.

(2-1-3) Formation of DDR-type zeolite membrane (membrane formation process):

Next, 7.35 g of ethylenediamine (produced by Wako Pure Chemical Industries, Ltd.) was put in a fluoro-resin jar of 100 ml, to which 1.156 g of 1-adamantaneamine (produced by Aldrich cooperation) was added and was dissolved so as not to leave precipitation of 1-adamantaneamine, thus preparing solution. Next, 98.0 g and 30 mass% of silica sol (SNOWTEX S, produced by Nissan Chemical Industries, LTD.), 20.1 g of sodium aluminate (produced by Wako Pure Chemical Industries, Ltd.) and 116.55 g of ion exchanged water were put in another container, which was then stirred lightly. Then, this was added to the above-mentioned solution, which was shaken strongly for mixture. In this way, raw-material solution (membrane synthesis liquid) was prepared. Then, the wide-mouthed jar containing this raw material solution was set in a homogenizer for stirring for 1 hour. Then, the "underlayer seeding substrate" was disposed in an inner cylinder of a stainless-steel pressure-resistant container (having a fluoro-resin inner cylinder with internal volume of 300 ml). Then, the prepared raw material solution (membrane synthesis liquid) was put in the inner cylinder, to which heat was applied (hydrothermal synthesis) at 140°C for 10 hours. After hydrothermal synthesis, it was cooled and then washed adequately, followed by drying. In this way, a hydrothermal compound was obtained. Then the temperature of the obtained hydrothermal compound was increased to 400°C at the rate of 0.1°C/min. in the air using an electric furnace, which was held for 4 hours. Then, the temperature was decreased for cooling to a room temperature at the rate of 1°C/min. to remove organic molecules (1-adamantaneamine) as a casting agent from the hydrothermal compound. In this way, an "underlayer formed substrate" was prepared, including a DDR-type zeolite membrane was formed on the surface of the wall of the substrate. The DDR-type zeolite membrane formed on the surface of the wall of the substrate was the underlayer.

(2-2) Formation of outermost layer:

Next, a DDR-type zeolite membrane (outermost layer) having a value of Si/Al ratio larger than that of the underlayer was formed on the underlayer made of DDR zeolite membrane.

(2-2-1) Preparation of DDR-type zeolite seed crystal:

Similarly to the formation of the underlayer, seed crystal dispersed liquid was prepared, in which DDR-type zeolite seed crystal was dispersed. The thus prepared DDR-type zeolite seed crystal had a value of Si/Al ratio of 90.

(2-2-2) Preparation of outermost layer seeding substrate (particle attachment process):

Next, the prepared seed crystal dispersed liquid was diluted with ion exchanged water for adjustment so that the concentration of the DDR-type zeolite crystal powder was 0.02 mass%. Then, the resultant was stirred with a stirrer at 300 rpm, whereby slurry liquid for seeding was obtained. Then, similarly to the formation of the underlayer, the substrate was fixed so that one end face was directed upward. Then, 160 ml of the slurry liquid for seeding was poured, and so was allowed to pass through the cells of the substrate. In this way, a coating membrane made of the slurry liquid for seeding was formed on the underlayer of the underlayer formed substrate. Then, air at a room temperature was sent at the air velocity of 3 m/sec. and allowed to flow into the cells of the substrate for 10 minutes to draft dry the coating. This "operation of pouring the slurry liquid for seeding, followed by draft drying" was repeated three times, whereby an "outermost seeding substrate" was prepared so that DDR-type zeolite seed crystal was attached on the underlayer of the underlayer formed substrate.

(2-2-3) Formation of DDR-type zeolite membrane (membrane formation process):

Next, 7.35 g of ethylenediamine (produced by Wako Pure Chemical Industries, Ltd.) was put in a fluoro-resin wide-mouthed jar of 100 ml, to which 1.156 g of 1-adamantaneamine (produced by Aldrich cooperation) was then added and was dissolved so as not to leave precipitation of 1-adamantaneamine, thus preparing solution. Next, 98.0 g and 30 mass% of silica sol (SNOWTEX S, produced by Nissan Chemical Industries, LTD.), 0.45 g of sodium aluminate (produced by Wako Pure Chemical Industries, Ltd.) and 116.55 g of ion exchanged water were put in another container, which was then stirred lightly. Then, this was added to the above-mentioned solution, which was shaken strongly for mixture. In this way, raw-material solution (membrane synthesis liquid) was prepared. Then, the wide-mouthed jar containing this raw material solution was set in a homogenizer for stirring for 1 hour. Then, the "outermost layer seeding substrate" was disposed in an inner cylinder of a stainless-steel pressure-resistant container (having a fluoro-resin inner cylinder with internal volume of 300 ml). Then, the prepared raw material solution (membrane synthesis liquid) was put in the inner cylinder, to which heat was applied (hydrothermal synthesis) at 140°C for 10 hours. After hydrothermal synthesis, it was cooled and then washed adequately, followed by drying. In this way, a hydrothermal compound was obtained. Then the temperature of the obtained hydrothermal compound was increased to 400°C at the rate of 0.1°C/min. in the air using an electric furnace, which was held for 4 hours. Then, the temperature was decreased for cooling to a room temperature at the rate of 1°C/min. to remove organic molecules (1-adamantaneamine) as a casting agent from the hydrothermal compound. In this way, a DDR-type zeolite membrane was formed on the underlayer of the outermost layer seeding substrate. The DDR-type zeolite membrane formed on the underlayer was the outermost layer. In this way, a ceramic separation filter was prepared, including a substrate and a separation membrane formed on the surface of a wall that defines and forms cells of the substrate.

Similarly to Example 1, the thus prepared ceramic separation filter was evaluated by a separation test and for its durability by the following methods. Table 1 shows the results.

As can be understood from Table 1, the ceramic separation filters of Examples 1 to 6 had smaller acetic acid concentration in the permeated liquid than the ceramic separation filters of Comparative examples 1, 2, and it took longer to increase "the acetic acid concentration in the permeated water to 1.5 times the value after 50 hours passed after the starting of the test" in Examples 1 to 6 than in Comparative examples 1, 2. In this way, it was found that the ceramic separation filters of Examples 1 to 6 had excellent separation performance and excellent durability. That is, it can be understood that the ceramic separation filters of Examples 1 to 6 had smaller acetic acid concentration in the permeated liquid than the ceramic separation filter of Comparative example 2, and so the amount of acetic acid passing through the separation membrane was less in the ceramic separation filters of Examples 1 to 6. This means that the ceramic separation filters of Examples 1 to 6 had excellent separation performance. Further, since it took particularly longer to increase "the acetic acid concentration in the permeated water to 1.5 times the value after 50 hours passed after the starting of the test" in Examples 1 to 6 than in Comparative example 1, and so it can be understood that these ceramic separation filters had excellent resistance to acid.

A ceramic separation filter of the present invention can be used as a filter to selectively separate water from acid aqueous solution, for example. A dehydration method of the present invention can be used as a method to selectively remove water from acid aqueous solution, for example.

Description of Reference Symbols

| | |
|---|---|
| 2a: | one end face |
| 2b: | other end face |
| 4: | wall |
| 6: | cell |
| 6a: | water-intake cell |
| 8: | substrate |
| 10, 110: | ceramic separation filter |
| 14: | separation membrane |
| 15: | outermost layer |
| 16: | underlayer |
| 18: | plugging portion |
| 20: | substrate main body |
| 21, 21A, 21B: | intermediate layer |
| 25: | storage vessel |
| 22: | storage vessel main body |
| 22a: | filtrate outlet |
| 24: | upper cap |
| 24a: | raw liquid discharge port |
| 26: | bottom cap |
| 26a: | raw liquid supply port |
| 28: | o-ring |
| 32: | first space |
| 34: | second space |
| 100: | dehydration apparatus |
| P: | region |

Provided is a ceramic separation filter having excellent separation performance and such acid resistance. The ceramic separation filter 10 includes a porous substrate 8 and a separation membrane 14 disposed on the substrate 8. The separation membrane 14 is a zeolite laminate including an outermost layer 15 made of zeolite that is located on an outermost surface side and an underlayer 16 made of zeolite that is located below the outermost layer 15, and the outermost layer 15 of the separation membrane 14 has a value of Si/Al ratio that is larger than a value of Si/Al ratio of the underlayer 16 of the separation membrane 14. The thickness of the outermost layer 15 of the separation membrane 14 preferably is 1/2 or less of the thickness of the underlayer 16.

**Claims**

1. A ceramic separation filter, comprising:

   a porous substrate; and a separation membrane disposed on the substrate,
   wherein the separation membrane is a zeolite laminate including an outermost layer made of zeolite that is located on an outermost surface side and an underlayer made of zeolite that is located below the outermost layer, and
   the outermost layer of the separation membrane has a value of Si/Al ratio that is larger than a value of Si/Al ratio of the underlayer of the separation membrane.

2. The ceramic separation filter according to claim 1,
   wherein the thickness of the outermost layer of the separation membrane is 1/2 or less of the thickness of the underlayer.

3. The ceramic separation filter according to claim 1 or 2,
   wherein the outermost layer and the underlayer of the separation membrane each include chabazite-type zeolite or DDR-type zeolite.

4. The ceramic separation filter according to claim 3,
   wherein the outermost layer and the underlayer of the separation membrane each are made chabazite-type zeolite.

5. The ceramic separation filter according to claim 3,
   wherein the outermost layer and the underlayer of the separation membrane each are made DDR-type zeolite.

6. The ceramic separation filter according to any one of claims 1 to 5,
   wherein the value of the Si/Al ratio of the underlayer of the separation membrane is 5 or less.

7. The ceramic separation filter according to any one of claims 1 to 6,
   wherein the value of the Si/Al ratio of the outermost layer of the separation membrane is 7 or more.

8. The ceramic separation filter according to any one of claims 1 to 7,
   wherein the substrate includes ceramic having a wall that defines and forms a plurality of cells extending from one end face to the other end face, and the separation membrane is disposed on a surface of the wall of the substrate.

9. A dehydration method to remove water from acidic aqueous solution using the ceramic separation filter according to any one of claims 1 to 8, the ceramic separation filter having a first space that is a space divided by the separation membrane and is located on a surface side of the separation membrane of the ceramic separation filter, and a second space that is a space on a rear face side of the separation membrane, wherein the second space between the first space and the second space is reduced in pressure less than atmospheric pressure, and in this state, comprising:

   a step of supplying the acidic aqueous solution to the first space so as to cover the surface of the separation membrane,
   a step of thus allowing the water in the acidic aqueous solution to selectively pass through from the first space to the second space, and
   a step of thus removing the water from the acidic aqueous solution.

FIG.1

FIG.2

FIG.3

FIG.4

FIG.5

Europäisches
Patentamt
European
Patent Office
Office européen
des brevets

# EUROPEAN SEARCH REPORT

Application Number

EP 14 16 1416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/007780 A1 (YAJIMA KENJI [JP] ET AL) 8 January 2009 (2009-01-08) * paragraphs [0058], [0059], [0074] * | 1,3,5,8,9 | INV. B01D63/06 B01D69/02 B01D69/12 B01D71/02 |
| A | JP 2005 289735 A (NAT INST OF ADV IND & TECHNOL) 20 October 2005 (2005-10-20) * abstract * | 1 | |
| X | EP 2 412 427 A1 (MITSUBISHI CHEM CORP [JP]) 1 February 2012 (2012-02-01) * paragraphs [0037], [0038]; claims 1-6,9; examples * | 1,2,6-8 | |
| A | WO 2006/059394 A1 (BUSSAN NANOTECH RES INST INC [JP]; MITRA ANUPAM [JP]) 8 June 2006 (2006-06-08) * example 1 * | 1 | |
| X | GB 2 340 112 A (EXXON CHEMICAL PATENTS INC [US]) 16 February 2000 (2000-02-16) | 1 | |
| A | * page 14, paragraph 1; claims 1,2,4; figure 4; example 3 * * page 20, paragraph 2 * | 3,4 | TECHNICAL FIELDS SEARCHED (IPC) B01D |
| X | EP 1 428 568 A1 (NGK INSULATORS LTD [JP]) 16 June 2004 (2004-06-16) * claims 1-3; examples * | 1,2,8 | |
| A | WO 2012/128217 A1 (NGK INSULATORS LTD [JP]; TERANISHI MAKOTO [JP]; MIYAHARA MAKOTO [JP];) 27 September 2012 (2012-09-27) * abstract; claims; figures; examples * | 1,8 | |
| X | JP 2012 045464 A (MITSUBISHI CHEM CORP) 8 March 2012 (2012-03-08) * paragraph [0075] * | 1,3,4,8,9 | |

The present search report has been drawn up for all claims

| Place of search | Date of completion of the search | Examiner |
|---|---|---|
| Munich | 18 June 2014 | Goers, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 16 1416

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2014

| Patent document cited in search report | | Publication date | Patent family member(s) | | Publication date |
|---|---|---|---|---|---|
| US 2009007780 | A1 | 08-01-2009 | JP | 5346580 B2 | 20-11-2013 |
| | | | US | 2009007780 A1 | 08-01-2009 |
| | | | WO | 2007119286 A1 | 25-10-2007 |
| JP 2005289735 | A | 20-10-2005 | JP | 4759724 B2 | 31-08-2011 |
| | | | JP | 2005289735 A | 20-10-2005 |
| EP 2412427 | A1 | 01-02-2012 | CN | 102361683 A | 22-02-2012 |
| | | | EP | 2412427 A1 | 01-02-2012 |
| | | | JP | 2010247150 A | 04-11-2010 |
| | | | US | 2012074065 A1 | 29-03-2012 |
| | | | WO | 2010110274 A1 | 30-09-2010 |
| WO 2006059394 | A1 | 08-06-2006 | CN | 101072626 A | 14-11-2007 |
| | | | EP | 1827662 A1 | 05-09-2007 |
| | | | JP | 2008521738 A | 26-06-2008 |
| | | | US | 2008160189 A1 | 03-07-2008 |
| | | | WO | 2006059394 A1 | 08-06-2006 |
| GB 2340112 | A | 16-02-2000 | NONE | | |
| EP 1428568 | A1 | 16-06-2004 | AT | 457824 T | 15-03-2010 |
| | | | AU | 2002328546 A2 | 14-04-2003 |
| | | | BR | 0212580 A | 13-10-2004 |
| | | | CA | 2460515 A1 | 10-04-2003 |
| | | | CN | 1585669 A | 23-02-2005 |
| | | | EP | 1428568 A1 | 16-06-2004 |
| | | | JP | 4494685 B2 | 30-06-2010 |
| | | | JP | 2003088735 A | 25-03-2003 |
| | | | MX | PA04002507 A | 31-05-2004 |
| | | | NZ | 531894 A | 29-10-2004 |
| | | | US | 2004229027 A1 | 18-11-2004 |
| | | | US | 2007184967 A1 | 09-08-2007 |
| | | | WO | 03028867 A1 | 10-04-2003 |
| | | | ZA | 200402020 A | 14-03-2005 |
| WO 2012128217 | A1 | 27-09-2012 | CN | 103459007 A | 18-12-2013 |
| | | | EP | 2689828 A1 | 29-01-2014 |
| | | | US | 2014021129 A1 | 23-01-2014 |
| | | | WO | 2012128217 A1 | 27-09-2012 |
| JP 2012045464 | A | 08-03-2012 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013075064 A
- JP 2011016123 A
- JP 2011121040 A
- JP 2004083375 A

**Non-patent literature cited in the description**

- **M.ITAKURA et al.** *Chemistry Letters,* 2008, vol. 37 (9), 908
- **M. J. DEN EXTER ; J. C. JANSEN ; H. VAN BEK-KUM et al.** Studies in Surface Science and Catalysis. Elsevier, 1994, vol. 84, 1159-1166